# EUROPEAN PATENT APPLICATION

(11) **EP 4 632 017 A1**
(43) Date of publication of application: **15.10.2025**
(21) Application number: 23900525.9
(22) Date of filing: 28.11.2023
(51) Int. Cl.: C09C 3/10, C09C 1/36

(54) **TITANATE COMPOUND PARTICLE POWDER AND DISPERSION, AND METHOD FOR PRODUCING SAME**

(30) Priority: 07.12.2022 JP 2022195886
(71) Applicant: Toda Kogyo Corp., Hiroshima-shi, Hiroshima 732-0828 (JP)
(72) Inventor: HAKATA Toshiyuki, Otake-shi, Hiroshima 739-0652 (JP); KAWAI Naho, Otake-shi, Hiroshima 739-0652 (JP)
(74) Representative: Puschmann Borchert Kaiser Klettner Patentanwälte Partnerschaft mbB
(86) International application number: PCT/JP2023/042594
(87) International publication number: WO 2024/122409

(57) **Abstract**

The present disclosure relates to a titanate compound particle powder that has been surface-treated using a surface treatment agent, and is characterized in that the titanate compound particle powder has an average primary particle size of 10 to 70 nm, a specific surface area of 30 m²/g or less, and an adsorption parameter of 15 or less as determined by water vapor adsorption measurement.

## Description

### TECHNICAL FIELD

The present invention aims to obtain a fine titanate compound particle powder that has been surface-treated with a surface treatment agent, and that has a low moisture adsorption amount, is inhibited from aggregating and re-aggregating, and has excellent dispersibility in various solvents, and to obtain a dispersion thereof, and also relates to an economically and industrially advantageous method for producing a titanate compound particle powder.

### BACKGROUND ART

In recent years, with the trend toward lighter, thinner, shorter, smaller, and higher performance of electronic components, there has been a demand for a finer titanate compound particle powder for use as dielectric materials in multilayer ceramic capacitors and the like, and for use as high refractive index materials used in anti-reflection films, lenses, and the like that require transparency.

On the other hand, as the particle size is reduced, leading to an increase in the chemical activity of the particle surface, for example, in the case of barium titanate, moisture is adsorbed onto the particle surface, causing a change in the composition. Therefore, in order to maintain the stability of the properties, it is desirable to develop a titanate compound particle powder with a low moisture adsorption.

In addition, as a method for obtaining a fine titanate compound particle powder, reactions in water systems such as hydrothermal reactions are known. However, since a particle powder in which moisture with high liquid bridging power is adsorbed on the particle surface tends to aggregate, interparticle powder aggregation is likely to occur when mixed with a resin or a solvent, resulting in problems such as an increase in the viscosity of the coating liquid.

In order to disperse a fine titanate compound particle powder, not only is it necessary to extend the time for disintegration and dispersion, which requires energy, but there is also an issue of re-aggregation due to long-term dispersion. Therefore, in order to maintain the stability of the dispersion over time, it is necessary to select a dispersant according to the solvent each time and to add a large amount of additives such as dispersants.

### CITATION LIST

### PATENT LITERATURE

[Patent Literature 1] Japanese Laid-Open Patent Publication No. 2019-94223
[Patent Literature 2] Japanese Laid-Open Patent Publication No. 2010-30861

### SUMMARY OF INVENTION

### TECHNICAL PROBLEM

Patent Literature 1 describes barium titanate that has been surface treated with a silane-based coupling agent and/or a titanate-based coupling agent.

However, the surface-treated barium titanate has a specific surface area of 33 to 200 m²/g and is not necessarily excellent in dispersibility in various solvents, and there are problems with the stability of the dispersion over time, such as re-aggregation.

Patent Literature 2 describes barium titanate coated with an organic substance.

However, all of these surface treatment agents have a low molecular weight structure, and there is no indication as to the stability over time or re-aggregation property of a dispersion of a sufficiently fine surface-treated barium titanate particle powder.

Furthermore, the literatures 1 and 2 do not disclose sufficient technical information regarding the water adsorption amount and dispersibility of the titanate compound particle powder and the temporal stability after dispersion, that is, re-aggregation property.

The present inventors set out to solve the above-mentioned problems as a technical objective, and as a result of numerous trial-and-error prototypes and experiments, they succeeded in obtaining a fine titanate compound particle powder that has low moisture adsorption on the particle surface, suppressed aggregation, and excellent dispersibility in various solvents, and a dispersion that can stably maintain a dispersed state in various solvents, thereby solving the above-mentioned technical objectives.

The present invention also provides an economically and industrially advantageous method for producing a titanate compound particle powder.

### SOLUTION TO PROBLEM

The above technical problems can be solved by the present inventions as follows.

The present invention is a titanate compound particle powder that has been surface-treated with a surface treatment agent, characterized by having an average primary particle size of 10 to 70 nm, a specific surface area of 30 m²/g or less, and an adsorption parameter of 15 or less as determined by water vapor adsorption measurement. (Invention 1)

The present invention also relates to the titanate compound particle powder having a monomolecular water vapor adsorption amount of 10 cm³/g or less as determined by water vapor adsorption measurement. (Invention 2)

The present invention also relates to the titanate compound particle powder, wherein the surface treatment agent is a polymer-type dispersant having an acid value of 10 or more. (Invention 3)

The present invention also relates to the titanate compound particle powder, wherein the surface treatment amount with the surface treatment agent is 2 to 20% by weight relative to the titanate compound particle powder. (Invention 4)

The present invention also relates to a dispersion in which the titanate compound particle powder is dispersed in a solvent. (Invention 5)

Further, the present invention is a production method, characterized by adding a solvent that forms an azeotropic mixture with water in which a surface treatment agent is dissolved to a reaction cake of a titanate compound particle powder obtained by a hydrothermal synthesis method, mixing the mixture, and then drying the mixture under reduced pressure, to obtain a titanate compound particle powder surface-treated with the surface treatment agent. (Invention 6)

### ADVANTAGEOUS EFFECTS OF INVENTION

According to the present invention, the titanate compound particle powder is surface-treated with a surface treatment agent, and although it is a fine particle having an average primary particle size of 10 to 70 nm and a specific surface area of 30 m²/g or less, it has low moisture adsorption, with an adsorption parameter measured by moisture adsorption being 15 or less, and therefore the liquid bridging force of the fine particle surface is reduced, so that the particle powder is less likely to aggregate, is dispersible in various solvents, has low re-aggregation, and has excellent dispersion stability. Therefore, the titanate compound particle powder according to the present invention can be suitably used for internal dielectric materials and internal electrode co-materials in multilayer ceramic capacitors, for high refractive index materials requiring high transparency used in anti-reflection films, lenses, etc., and for piezoelectric materials, and the like.

The titanate compound particle powder according to the present invention can be produced by an efficient production method that not only improves productivity but also reduces the environmental impact, in which a solvent which forms an azeotropic mixture with water in which a surface treatment agent is dissolved is added to a reaction cake of a titanate compound particle powder obtained by a hydrothermal synthesis method, the mixture is mixed, and then the mixture is dried under reduced pressure, to obtain a titanate compound particle powder surface-treated with the surface treatment agent.

### DESCRIPTION OF EMBODIMENTS

The configuration of the present invention will be described in detail as follows.

First, the titanate compound particle powder according to the present invention will be described.

The titanate compound particle powder according to the present invention has an average primary particle size of 10 nm or more and 70 nm or less, more preferably 15 to 65 nm, and even more preferably 20 to 60 nm. It is difficult to industrially produce a titanate compound particle powder having an average primary particle size of less than 10 nm using current manufacturing methods. In addition, a titanate compound particle powder having an average primary particle size of more than 70 nm is unsuitable for use in MLCC electrodes which are becoming smaller in size, and may not be transparent enough for use as a high refractive index material.

The titanate compound particle powder according to the present invention has a specific surface area of 30 m²/g or less, more preferably 28 m²/g or less, and even more preferably 25 m²/g or less. If the specific surface area exceeds 30 m²/g, the treatment effect of the surface treatment agent cannot be obtained, and there is a risk that the dispersibility is not excellent.

There is no particular lower limit for the specific surface area, but since there is a risk of poor dispersibility, it is preferably 8 m²/g, more preferably 9 m²/g, and even more preferably 10 m²/g.

The shape of the titanate compound particle powder according to the present invention is not particularly limited, but in order to obtain excellent dispersibility, a shape as close to a sphere as possible is preferred.

The titanate compound particle powder according to the present invention is not particularly limited, but is preferably one having a perovskite structure (MTiO₃: M is one or more elements selected from the group consisting of Ba, Sr, Ca, Zr and Mg), including barium titanate (BaTiO₃) or strontium titanate (SrTiO₃), and the like.

The adsorption parameter determined by water vapor adsorption measurement of the titanate compound particle powder according to the present invention is a parameter indicating the difference in heat of adsorption between the first adsorption layer and the second adsorption layer and thereafter, and is an indicator of a lower affinity of the titanate compound particle powder surface for water, the smaller the value.

The adsorption parameter of the titanate compound particle powder according to the present invention, as determined by water vapor adsorption measurement, is 15 or less, more preferably 14 or less, and even more preferably 13 or less. If the adsorption parameter exceeds 15, the liquid bridging force due to water adsorption on the particle surface increases, and there is a risk of promoting aggregation between fine particle powders. Although there is no particular restriction on the lower limit of the adsorption parameter, there is a risk of inhibiting dispersibility in a solvent such as alcohol, so a value greater than 0 is preferred, more preferably 1 or more, and even more preferably 2 or more.

The monomolecular water vapor adsorption amount of the titanate compound particle powder according to the present invention, as determined by water vapor adsorption measurement, represents the amount of water vapor adsorbed on the surface of the titanate compound particle powder in the first layer.

The monomolecular water vapor adsorption amount of the titanate compound particle powder according to the present invention, as determined by water vapor adsorption measurement, is preferably 10 cm³/g or less, more preferably 9 cm³/g or less, and even more preferably 8 cm³/g or less. This is because if the monomolecular water vapor adsorption amount exceeds 10 cm³/g, the liquid bridging force due to water adsorption on the particle surface increases, which may promote aggregation between fine particle powders. There is no particular lower limit, but since the particle surface becomes hydrophobic, which may deteriorate the wettability to the solvent and cause the particle powder to become non-dispersible, a value greater than 0 cm³/g is preferred, more preferably 0.5 cm³/g or more, and even more preferably 1 cm³/g or more is preferred.

Next, the surface treatment agent in the present invention will be described.

As the surface treatment agent in the present invention, a polymer type dispersant having an acid value of 10 or more is preferred, and the acid value is more preferably 11 or more, and even more preferably 12 or more. If the acid value is less than 10, the titanate compound is poorly adsorbed to the reaction cake particle surface, causing problems with the stability of the dispersion over time. Although there is no particular upper limit for the acid value, it is preferably 100 or less, more preferably 70 or less, and even more preferably 50 or less, since there is a risk of increased water vapor adsorption.

Moreover, the surface treatment agent in the present invention is preferably anionic, since nonionic or cationic polymer-type dispersants may be poorly adsorbed to the surface of the titanate compound particle.

The surface treatment agent in the present invention is preferably a polymer-type dispersant having an acrylic acid group or a methacrylic acid group and having a molecular weight of about 800 to 2000, and the structure is preferably a block type or graft type polymer, because the surface treatment agent has excellent adsorptivity to the surface of the titanate compound particle powder and is inhibited from being desorbed, thereby providing stability of the dispersion over time.

The surface treatment amount with the surface treatment agent in the present invention is preferably 2 to 20% by weight, more preferably 5 to 15% by weight, and further preferably 7 to 14% by weight, relative to the titanate compound particle powder. If the surface treatment amount with the surface treatment agent is less than 2% by weight, no effect in terms of dispersibility can be obtained, whereas if it exceeds 20% by weight, the time required for desolvation treatment becomes long when the green sheet is formed, which is not preferable.

Next, the method for producing a titanate compound particle powder according to the present invention will be described.

The method for producing a titanate compound particle powder according to the present invention is characterized in that a solvent which forms an azeotrope with water in which a surface treatment agent is dissolved is added to a reaction cake of a titanate compound obtained by a hydrothermal synthesis method, the mixture is mixed, and then the mixture is dried under reduced pressure, to obtain a titanate compound particle powder which has been surface-treated with the surface treatment agent.

The reaction cake of the titanate compound can be obtained according to the existing hydrothermal synthesis method with reference to Japanese Patent No. 4,702,515 and Japanese Patent No. 6,583,637.

The reaction cake of the titanate compound obtained by the hydrothermal synthesis method is not particularly limited, but the average primary particle size is preferably in the range of about 10 to 70 nm, and the specific surface area is preferably in the range of about 10 to 110 m²/g.

Next, the surface treatment in the present invention will be described.

The reaction cake of a titanate compound may be used as a suspension as it is after washing with water, or may be used after increasing the concentration of the titanate compound by suction filtration or centrifugal filtration. There is no particular limitation on the concentration of the titanate compound, as long as it maintains its fluidity.

The azeotropic solvent in which the surface treatment agent has been dissolved is added to the reaction cake of the titanate compound, and the mixture is stirred and mixed at room temperature for about 30 minutes to obtain a mixed liquid.

By subjecting the reaction cake obtained after the hydrothermal synthesis to a surface treatment, the particle surface can be more uniformly surface-treated.

The azeotropic solvent for dissolving the surface treatment agent is not particularly limited as long as it is a solvent that forms an azeotrope with water, but it is sufficient to select a solvent that can dissolve the surface treatment agent and has an azeotropic point with water as low as possible. The azeotropic solvent is preferably a solvent with a boiling point of about 78 to 145°C, and for example, ethanol or IPA is preferable.

By using a solvent that forms an azeotrope with water, it is expected that productivity will be improved by shortening the time required for dissolving the surface treatment agent and for drying.

The amount (A) of the azeotropic solvent to be added relative to the amount of water (B) in the reaction cake of the titanate compound is preferably in the range of 0.1 to 2 as an A/B ratio. This is because if the A/B ratio is less than 0.1, the surface treatment agents that can be used are limited, and if it exceeds 2, a long drying time may be required.

The stirring and mixing method is not particularly limited as long as it is a method that allows the surface treatment agent to adhere to and be adsorbed onto the surface of the titanate compound particle, and a method in which the titanate compound particle is mixed with the surface treatment agent while being disintegrated by mechanical force using a bead mill, homogenizer, or the like to perform the surface treatment is preferred.

The water and the azeotropic solvent in the mixed solution are removed by using a reduced pressure dryer. Examples of the reduced pressure dryer include an evaporator and a vacuum stirring dryer, but there is no particular limitation thereto, and any method can be used as long as it can obtain a titanate compound particle powder surface-treated with a surface treatment agent by drying.

In the reduced pressure drying step, it is preferable to use an apparatus capable of recovering the azeotropic solvent. The azeotropic solvent removed and recovered in the drying step can be reused as the azeotropic solvent in the surface treatment step again after measuring the concentration. The production method according to the present invention can be said to be an efficient production method that not only has high productivity but also reduces the environmental load.

Next, the dispersion according to the present invention will be described.

The titanate compound particle powder according to the present invention can be easily dispersed in various solvents. The dispersion solvent is not particularly limited, but it is preferable to use solvents having an SP value of about 8 to 13, preferably including, for example, ethanol, DHT, PGMEA, DHTA, IPA, toluene, etc., and one or more of them may be used in combination.

The concentration of the titanate compound particle powder in the solvent is not particularly limited as long as it is dispersible, but is preferably about 20 to 50% by weight.

The method for dispersing the titanate compound particle powder according to the present invention in various solvents is not particularly limited, and a stirrer, a paint shaker, a bead mill, a ball mill, or the like can be used.

The dispersion time is not particularly limited, but is preferably 1 hour or more. There is no upper limit, and even 10 hours or more will not cause any problems.

The titanate compound particle powder according to the present invention is composed of a titanate compound that has been surface-treated using a surface treatment agent, and therefore, although it is a fine particle, it has a small degree of aggregation in a solvent and is easily dispersible, allowing it to be easily monodispersed in a solvent.

The obtained dispersion can be subjected to solid-liquid separation by centrifugation, standing, or the like. The average secondary particle size in the supernatant is preferably 10 to 100 nm, more preferably 30 to 80 nm. When the titanate compound particle powder of the present invention is dispersed for about one hour or more, the average secondary particle size changes little depending on the dispersion time, and it can be said that the titanate compound particle powder has low re-aggregation tendency.

The polydispersity index represents the particle size distribution, and a lower value indicates a smaller variation in the average secondary particle size. The polydispersity index is preferably 0.30 or less, more preferably 0.28 or less, and even more preferably 0.25 or less. The titanate compound particle powder of the present invention shows little change in the polydispersity index depending on the dispersion time, so long as the dispersion time is about 1 to 10 hours.

The titanate compound particle powder according to the present invention is surface-treated with an anionic polymer-type dispersant having an acid value, so that the surface treatment agent is firmly adsorbed on the particle surface, therefore, re-aggregation, which occurs due to an increase in particle surface area caused by disintegration of the aggregation state of the particle, is unlikely to occur.

### EXAMPLES

Examples of the present invention will be described below, but the present invention is not limited to these.

In the present invention, the average primary particle size of the particle powders was measured from about 200 particles in a photograph (magnification: 50000 times) observed with a scanning electron microscope (Hitachi, Ltd. S-4300).

The average secondary particle size was measured in each solvent using a dynamic light scattering method ("FPAR-1000, manufactured by Otsuka Electronics Co., Ltd.") and obtained using a cumulant analysis method. At the same time, the polydispersity index, which represents the particle size distribution, was measured using a histogram analysis method.

The specific surface area value was measured by a BET method.

The monomolecular water vapor adsorption amount and the adsorption parameter were measured using a BELSOR Paqua 3 (manufactured by BEL Japan, Inc.).

### (Example 1)

With reference to Japanese Patent No. 4702515, an aqueous titanium chloride solution (manufactured by Kanto Chemical Co., Ltd.) was neutralized with barium hydroxide octahydrate (manufactured by Kanto Chemical Co., Ltd.) to obtain a titanium colloid. The obtained titanium colloid and the remaining barium hydroxide were mixed and stirred to generate barium titanate particles at a reaction temperature of 70°C, and after a hydrothermal reaction, the particles were cooled to room temperature, washed with water and filtered to obtain a barium titanate reaction cake.

A surface treatment liquid prepared by dissolving 100 g of Disperbyk-190 (manufactured by BYK-Chemie, acid value 10) as a surface treatment agent in 600 g of IPA was added to 1 kg of the barium titanate reaction cake having a solid content of 50%, and the mixture was stirred and mixed at room temperature for 30 minutes to obtain a mixed liquid. The mixed liquid was transferred to a 3 L eggplant flask and dried under reduced pressure using an evaporator to obtain a surface-treated barium titanate particle powder.

### (Examples 2 to 4, Comparative Examples 1 to 5)

Surface-treated titanate compound particle powders were obtained using the same procedure as in Example 1, with various changes as shown in Table 1. Comparative Example 5 was a titanate compound particle powder that had not been surface-treated, and had an average primary particle size of 44 nm, a specific surface area of 33.7 m²/g, a monomolecular water vapor adsorption amount of 9.71 cm³/g, and an adsorption parameter of 33.9. The properties of the titanate compound reaction cake and the surface-treated titanate compound particle powders are shown in Table 1.

### (Example 5, Comparative Example 6)

With reference to Japanese Patent No. 6,583,637, the barium hydroxide octahydrate in Example 1 was replaced with strontium hydroxide octahydrate (manufactured by Kanto Chemical Co., Ltd.) to obtain a reaction cake of strontium titanate, and a surface-treated strontium titanate particle powder was obtained using the surface treatment agent shown in Table 1.

The surface treatment agents used in Examples 1 to 5 are all anionic polymer-type dispersants.

**Table 1**

| | reaction cake of titanate compound | | | surface treatment agent | | | | surface-treated titanate compound particle powder | | | |
|---|---|---|---|---|---|---|---|---|---|---|---|
| | type | average primary particle size (nm) | specific surface area (m²/g) | brand | manufacturer name | acid value | surface treatment amount (%) | average primary particle size (nm) | specific surface area (m²/g) | monomolecular water vapor adsorption amount (cm³/g) | adsorption parameter |
| Example 1 | barium titanate | 44 | 34 | Disperbyk-190 | BYK-Chemie | 10 | 8 | 44 | 12 | 7.70 | 13.0 |
| Example 2 | barium titanate | 44 | 34 | DISPARLON AQ38(., | Kusumoto Chemicals. Ltd. | 15 | 15 | 44 | 12 | 7.47 | 12.5 |
| Example 3 | barium titanate | 32 | 58 | Disperbyk-190 | BYK-Chemie | 10 | 14 | 32 | 14 | 7.66 | 12.9 |
| Example 4 | barium titanate | 32 | 58 | DISPARLON AQ36(., | Kusumoto Chemicals. Ltd. | 26 | 12 | 32 | 13 | 7.29 | 13.0 |
| Example 5 | strontium titanate | 35 | 43 | Disperbyk-2010 | BYK-Chemie | 20 | 12 | 35 | 12 | 7.57 | 12.9 |
| Comparative Example 1 | barium titanate | 32 | 58 | DISPARLON AQH-800 | Kusumoto Chemicals, Ltd. | 7.5 | 8 | 32 | 28 | 10.22 | 22.3 |
| Comparative Example 2 | barium titanate | 44 | 34 | XIAMETER OFS-2306 | Dow Toray Co., Ltd. | 0 | 10 | 44 | 13 | 8.66 | 21.1 |
| Comparative Example 3 | barium titanate | 44 | 34 | RHEODOL TW-0106V | Kao Corporation | 0 | 12 | 44 | 26 | 9.62 | 31.6 |
| Comparative Example 4 | barium titanate | 32 | 58 | RHEODOL SP-O10V | Kao Corporation | 0 | 10 | 32 | 31 | 10.85 | 30.8 |
| Comparative Example 5 | barium titanate | 44 | 34 | none | none | - | - | - | - | - | - |
| Comparative Example 6 | strontium titanate | 35 | 43 | WC-M-1211 | Arakawa Chemical Industries, Ltd. | 0 | 10 | 35 | 29 | 9.88 | 23.7 |

The obtained titanate compound particle powders were each dispersed in a solvent according to the following procedure, and re-aggregation characteristics over time were evaluated as evaluation of the dispersibility in various solvents and the dispersion stability.

Nine grams (9 g) of each of the surface-treated titanate compound particle powders was weighed into a 100 ml plastic container, 21 g of each of the solvents was added, and 45 g of ZrO₂ beads having a particle size of 50 µm were added, followed by shaking using a paint shaker.

The dispersions obtained after shaking for 60 minutes and 120 minutes were subjected to solid-liquid separation using a centrifuge (5,000 rpm, 30 minutes), and the average secondary particle size and particle size distribution were measured using the supernatant. Table 2 shows the conditions of the surface-treated titanate compound particle powders and the solvent used for dispersion, as well as the average secondary particle size and polydispersity index after shaking for 60 minutes and 120 minutes.

By mixing the titanate compound particle powders according to the present invention with a solvent and shaking the mixture, a dispersion containing fine titanate compound particle powders having an excellent particle size distribution of the average secondary particle size could be obtained. Furthermore, a comparison of the average secondary particle size and polydispersity index after 60 minutes of shaking and after 120 minutes of shaking showed that they were almost unchanged by the dispersion time. Thus, it can be said that the titanate compound particle powders according to the present invention can be made into a sufficient dispersion in a relatively short time, have low re-aggregation due to dispersion, and are excellent in dispersion stability.

Furthermore, the titanate compound particle powders according to the present invention have a low adsorption parameter of 15 or less as determined by moisture adsorption measurement, so that they are less likely to aggregate, can be dispersed in various solvents, have low re-aggregation tendency, and are excellent in dispersion stability.

**Table 2**

| surface-treated titanate compound particle powder | solvent | shaking time (60 minutes) | | shaking time (120 minutes) | |
|---|---|---|---|---|---|
| | | average secondary particle size (nm) | polydispersity index | average secondary particle size (nm) | polydispersity index |
| Example 1 | ethanol | 52 | 0.17 | 48 | 0.16 |
| Example 1 | toluene/ethanol (7/3) | 58 | 0.19 | 56 | 0.18 |
| Example 2 | DHT | 59 | 0.28 | 45 | 0.18 |
| Example 3 | DHTA | 40 | 0.19 | 38 | 0.18 |
| Example 4 | PGMEA | 46 | 0.20 | 40 | 0.19 |
| Example 5 | PGMEA | 37 | 0.17 | 36 | 0.16 |
| Comparative Example 1 | PGMEA | not dispersed | - | - | - |
| Comparative Example2 | ethanol | not dispersed | - | - | - |
| Comparative Example 3 | ethanol | not dispersed | - | - | - |
| Comparative Example 4 | PGMEA | not dispersed | - | - | - |
| Comparative Example 5 | toluene/ethanol (7/3) | 67 | 0.38 | 761 | 0.32 |
| Comparative Example 6 | DHTA | not dispersed | - | - | - |

### INDUSTRIAL APPLICABILITY

The surface-treated titanate compound particle powder according to the present invention is a fine particle and has a low moisture adsorption amount, therefore relates to a titanate compound particle powder that is less likely to aggregate, dispersible in various solvents, less likely to re-aggregate after dispersion and excellent in dispersion stability, and to a dispersion thereof.

Therefore, the titanate compound particle powder is suitable for internal dielectric materials and internal electrode co-materials in multilayer ceramic capacitors, for high refractive index materials that require high transparency used in anti-reflection films, lenses, high refractive index films, optical elements, etc., and for piezoelectric materials, and the like, consisting mainly of the titanate compound particle powder.

Furthermore, the titanate compound particle dispersion is less susceptible to re-aggregation due to vibration and can maintain a dispersed state, making it suitable for storage and transportation.

The present invention also provides an economically and industrially advantageous method for producing a titanate compound particle powder.

## Claims

1. A titanate compound particle powder surface-treated with a surface treatment agent, **characterized by** having an average primary particle size of 10 to 70 nm, a specific surface area of 30 m²/g or less, and an adsorption parameter of 15 or less as determined by water vapor adsorption measurement.

2. The titanate compound particle powder according to claim 1, which has a monomolecular water vapor adsorption amount of 10 cm³/g or less as determined by water vapor adsorption measurement.

3. The titanate compound particle powder according to claim 1, wherein the surface treatment agent is a polymer-type dispersant having an acid value of 10 or more.

4. The titanate compound particle powder according to claim 1, wherein the surface treatment amount with the surface treatment agent is 2 to 20% by weight relative to the titanate compound.

5. A dispersion in which the titanate compound particle powder according to claim 1 is dispersed in a solvent.

6. A method for producing a surface-treated titanate compound particle powder, **characterized by** adding a solvent that forms an azeotropic mixture with water in which a surface treatment agent is dissolved to a reaction cake of a titanate compound obtained by a hydrothermal synthesis method, mixing the mixture, and then drying the mixture under reduced pressure.
